(19) **Europäisches Patentamt / European Patent Office / Office européen des brevets**

(11) **EP 1 382 143 B1**

(12) **EUROPEAN PATENT SPECIFICATION**

(45) Date of publication and mention
of the grant of the patent:
**07.02.2007 Bulletin 2007/06**

(51) Int Cl.:
*H04J 3/06* (2006.01)   *H04Q 7/30* (2006.01)
*G10L 21/04* (2006.01)

(21) Application number: **01931645.4**

(22) Date of filing: **24.04.2001**

(86) International application number:
**PCT/EP2001/004608**

(87) International publication number:
**WO 2002/087137 (31.10.2002 Gazette 2002/44)**

(54) **METHODS FOR CHANGING THE SIZE OF A JITTER BUFFER AND FOR TIME ALIGNMENT, COMMUNICATIONS SYSTEM, RECEIVING END, AND TRANSCODER**

VERFAHREN ZUM ÄNDERN DER GRÖSSE EINES ZITLERPUFFERS ZUR ZEITAUSRICHTUNG, KOMMUNIKATIONSSYSTEM, EMPFÄNGERSEITE UND TRANSCODER

PROCEDES DE CHANGEMENT DE LA TAILLE D'UN TAMPON DE GIGUE ET POUR L'ALIGNEMENT TEMPOREL, UN SYSTEME DE COMMUNICATIONS, UNE EXTREMITE DE RECEPTION ET UN TRANSCODEUR

(84) Designated Contracting States:
**AT BE CH CY DE DK ES FI FR GB GR IE IT LI LU MC NL PT SE TR**

(43) Date of publication of application:
**21.01.2004 Bulletin 2004/04**

(60) Divisional application:
**05004865.1 / 1 536 582**

(73) Proprietor: **Nokia Corporation**
**02150 Espoo (FI)**

(72) Inventors:
• **KURITTU, Antti**
**FIN-01600 Vantaa (FI)**

• **KIRLA, Olli**
**FIN-02610 ESPOO (FI)**

(74) Representative: **Cohausz & Florack**
**Patent- und Rechtsanwälte**
**Bleichstrasse 14**
**40211 Düsseldorf (DE)**

(56) References cited:
| | |
|---|---|
| **EP-A- 0 279 451** | **EP-A- 0 681 398** |
| **EP-A- 0 921 666** | **US-A- 4 076 958** |
| **US-A- 4 453 247** | **US-A- 5 664 044** |
| **US-A- 5 825 771** | **US-A- 5 862 232** |
| **US-A- 5 920 840** | |

EP 1 382 143 B1

**Description**

FIELD OF THE INVENTION

The invention relates to a method for changing the size of a jitter buffer, which jitter buffer is employed at a receiving end in a communications system including a packet network for buffering received packets containing audio data in order to enable a compensation of varying delays of said received packets. The invention moreover relates to such a communications system, to such a receiving end and to processing means for such a receiving end.

BACKGROUND OF THE INVENTION

An example of a packet network is a voice over IP (VoIP) network.
IP telephony or voice over IP (VoIP) enables users to transmit audio signals like voice over the Internet Protocol. Sending voice over the internet is done by inserting speech samples or compressed speech into packets. The packets are then routed independently from each other to their destination according to the IP-address included in each packet.
One drawback in IP telephony is the availability and performance of networks. Although the local networks might be stable and predictable, the Internet is often congested and there are no guarantees that packets are not lost or significantly delayed. Lost packets and long delays have an immediate effect on speech quality, reciprocity and the pace of conversation.
Because of the independent routing of the packets, the packets moreover take variable times to go through the network. The variation in packet arrival times is called jitter. To play out the voice in the receiving end correctly, though, the packets must be in the order of transmission and equally spaced. To achieve this requirement a jitter buffer can be employed. The jitter buffer can be located before or after a decoder used at the receiving end for decoding the speech which was encoded for transmission. In the jitter buffer, the right order of packets can then be assured by checking sequence numbers contained in the packets. Equally contained timestamps can further be used to determine the jitter level in the network and for compensating for the jitter in play out.
The size of the jitter buffer, however, has a contrary effect on the number of packets that are lost and on the end-to-end delay. If the jitter buffer is very small, many packets are lost because they have arrived after their playout point. On the other hand, if the jitter buffer is very large an excessive end-to-end delay appears. Both, packet loss and end-to-end delay, have an effect on speech quality. Therefore, the size of the jitter buffer has to result in an acceptable value for both, packet loss and delay. Since both can vary in time, adaptive jitter buffers have to be employed in order to be able to continuously guarantee a good compromise for the two factors. The size of an adaptive jitter buffer can be changed based on measured delays of received speech packets and measured delay variances between received speech packets.
Known methods adjust the jitter buffer size in the beginning of a talkspurt. At the beginning of a talkspurt and therefore at the end of a pause in speech, the played out speech is not affected by the adjustment of the jitter buffer size. This means, however, that an adjustment has to be delayed until a beginning of a talkspurt occurs and that a voice activity detector (VAD) is needed. Such methods are described e.g. in "An algorithm for playout of packet voice based on adaptive adjustment of talkspurt silence periods", LCN '99, Conference on Local Computer Networks, 1999, Pages 224 -231, by J. Pinto and K.J. Christensen, and in "Adaptive playout mechanisms for packetized audio applications in wide-area networks", INFOCOM '94, 13th Proceedings IEEE Networking for Global Communications, 1994, Pages 680 -688, vol.2, by R. Ramjee, J. Kurose, D. Towsley and H. Schulzrinne.
A similar problem with jitter buffers can arise e.g. in voice over ATM networks.
A similar problem can moreover arise during time alignment in GSM (global system for mobile communications) or 3G (third generation) systems. In radio communications systems like GSM or a 3G system, the air interface requires a tight synchronization between uplink and downlink transmission. However, at the start of call or after a handover, the initial phase shift between uplink and downlink framing in a transcoder used on the network side for encoding data for downlink transmissions and decoding data from uplink transmissions is different from the corresponding phase shift at the radio interface. This phase shift can also be seen in the phase shift only of the downlink framing in the transcoder and at a radio interface of the radio communications system. Therefore, a downlink buffering is needed to achieve a correct synchronization for the air interface, which buffer is included in GSM in a base station and in 3G networks in a radio network controller (RNC) of the communications system. The buffering leads to an additional delay of up to one speech frame in the base station in downlink direction. To minimize this buffering delay, a time alignment procedure can be utilized on the network side. The time alignment is used to align the phase shift in the framing of the transcoder and thus to minimizing the buffering delay after a call set-up or handover. During the time alignment, the base station or radio network controller requests the transcoder to carry out a desired time alignment. In the time alignment, the transmission time instant of an encoded speech frame and the following frames need to be advanced or delayed. Thereby the window (one speech frame) of input buffer of linear samples before the encoder has to be slided in to the desired direction by the amount of samples requested by the base station. Presently, a time alignment is carried out by dropping or repeating speech samples, which leads to a deterioration of the speech quality.

U.S. patent 5,825,771 A presents a communication system including a packet network, where a receiving end employs a buffer for buffering received packets containing audio data in order to enable a compensation of varying delays of the received packets.

SUMMARY OF THE INVENTION

For a first aspect of the invention, it is an object to enable a faster adaptation of the size of a jitter buffer to changing conditions in voice over IP transmissions.

The invention is specified in the appended claims.

The invention proceeds from the idea that the size of a jitter buffer could be adapted to the present conditions of transmission immediately, i.e. for example also during ongoing audio transmissions like active speech, if an empty space resulting in an increased jitter buffer is compensated. This is achieved according to the invention by creating additional data based on the existing data whenever the jitter buffer size has to be increased.

It is thus an advantage of the invention that it enables in a simple way a faster adaptation to changed transmission conditions. More specifically, the jitter buffer size can be changed immediately after the decision that a increase of the jitter buffer size is necessary was made, instead of waiting for a pause in audio.

The packet network can be in particular a voice over internet protocol or a voice over ATM network.

Advantageously, though not necessarily, whenever it was determined that the current jitter buffer size is to be decreased, the jitter buffer size is moreover decreased by condensing at least part of the audio data currently present in the jitter buffer. In case also a decrease of the jitter buffer is thus carried without waiting for a pause in speech, no voice activity detector is needed, since it is no longer necessary to detect speech pauses.

There exists a variety of possibilities for expanding or contracting the existing jitter buffer data in order to compensate for an increase or decrease of the jitter buffer size. Basically five preferred embodiments will be presented.

In a first preferred embodiment of the invention for increasing the jitter buffer size, some known bad frame handling method is employed for increasing the jitter buffer size, i.e. an empty jitter buffer space is treated as if the corresponding packets were lost during transmission, which loss has to be concealed.

In particular, the bad frame handler defined in ITU-T Recommendation G.711, Appendix I: "A high quality low-complexity algorithm for packet loss concealment with G.711", September 1999, can be employed for increasing the jitter buffer size. This bad frame handler employs a pitch waveform replication. Pitch waveform replications are based on the quasi-periodic nature of voiced audio signals, which means that the contents of consecutive packets are likely to resemble one another. A gap can therefore be filled by replicating one or more pitch periods of previous packets.

To ensure a smooth transition between the real and the synthesized audio signal, a predetermined number of samples of the real and the synthesized audio signal can be overlap added. For the same reason, repeated pitch period length waveforms may be overlap added.

If the jitter buffer size is increased by many packets at once, phonemes become unnaturally long. To compensate for this effect, the increase in jitter buffer size could be distributed to several small increases of only one added packet at a time. This would increase signal variation, as synthesizing one packet would be done from two valid packets instead of synthesizing all required packets from the pitch buffer, resulting in a better sound quality. However, when increasing the jitter buffer in small steps, it is not possible to respond to variable network delays as fast as with producing many synthesized packets at once. Therefore it is proposed that when the jitter buffer size has to be increased by several packets, rather all packets are generated at once and the resulting data is attenuated in order to prevent that the sound quality suffers.

In a first preferred embodiment of the invention for decreasing the jitter buffer size, two selected frames are overlapped, the frames in between being discarded. The frames that are overlapped are selected in a distance with which the desired decrease in jitter buffer size can be achieved. In case a decrease by only one frame is to be achieved, two consecutive frames are selected. This embodiment results in a simple implementation requiring little computational power.

Advantageously, the first frame in time used for overlapping is first multiplied with a downramp function and the second frame in time used for overlapping is first multiplied with an upramp function. For carrying out the overlapping, the products are then added.

A second and a third preferred embodiment of the invention for increasing and decreasing a jitter buffer size are based on time scaling, which enable a stretching or compressing of a selected segment of data in a buffer.

In the second preferred embodiment, a time domain time scaling is employed.

In time domain time scaling based jitter buffer size change methods, first data is selected from the received data that is to be used for time scaling. Then some time scaling method is used to time scale the selected part of speech. This new time scaled signal can then be used to replace at least part of the firstly selected signal, thus compensating for the change in jitter buffer size.

A time domain time scaling method of good quality and with low computational power is the Waveform Similarity OverLap Add (WSOLA), which was described for example by W. Verhelst and M. Roelands in "An overlap-add technique based on waveform similarity (WSOLA) for high quality time-scale modification of speech", ICASSP-93., IEEE International Conference on Acoustics, Speech, and Signal Processing, 1993., Volume 2, Pages 554 -557. The Waveform Similarity OverLap Add method is based on constructing a synthetic waveform that maintains maximal local similarity to the original signal. The synthetic waveform and the original waveform have maximal similarity around time instances specified by a time warping function.

The time domain scaling method can be used for time scale expanding or compressing and thus for increasing or decreasing the employed size of a jitter buffer.

At the transition from the time scaled data to the following data, the pitch period may not correspond to the original pitch period. In order to decrease this effect of phase mismatches between time scaled data and the following real data, the time scaling can be extended for a predetermined length, preferably for an additional 1/2 packet length. The extension of the time scaled signal which is not required for substituting received audio data in the jitter buffer is overlapped with the following real data.

According to the third preferred embodiment, a frequency domain time scaling is employed for generating additional data or for condensing the existing data.

In a frequency domain time scaling, first overlapping windowed parts of the original data are Fourier transformed. Then, a time scale modification is applied. The modification depends on the one hand on whether an increase or a decrease of the jitter buffer size is to be compensated. On the other hand it depends on the amount of the increase or decrease. After the time scale modification, inverse Fourier transformations are applied to the time scale modified, Fourier transformed data. Because of the time scale modification, the distance between the analysis windows applied to the original data is different from the distance between the synthesis windows resulting in the inverse Fourier transformation. Depending on the time scale modification, the resulting data is thus expanded or compressed compared to the original data. Therefore, also this method can be used equally for adding and for removing data for an increase or decrease of the employed size of a jitter buffer.

In particular, a phase vocoder time scale modification method described for example in "Applications of Digital Signal Processing to Audio and Acoustics", Kluver Academic Pub; ISBN: 0792381300, 1998, by K. Brandenburg and M. Kahrs can be used for the third preferred embodiment of the invention. This method is based on taking short-time Fourier transforms (STFT) of a speech signal.

While the first three presented preferred embodiments of the invention proceed from decoded audio signals, the invention can be employed in a fourth preferred embodiment with parametric audio signal coding. In this case, the jitter buffer size can be increased according to a known bad frame handling. This can be carried out for example with a bad frame handler of the coder.

An example for a bad frame handler that could be employed in the fourth preferred embodiment of the invention is the error concealment in Enhanced Full Rate (EFR) codec described in "Substitution and muting of lost frames for Enhanced Full Rate (EFR) speech traffic channels (GSM 06.61 version 8.0.0 Release 1999). Digital cellular telecommunications system (Phase 2+)", ETSI EN 300 727 v.8.0.0, March 2000, which is used in the GSM. This document specifies a frame (packet) substitution and muting procedure for one or more consecutive lost frames. If applied to empty frames resulting from an increase of the jitter buffer size, the first empty frame is replaced by repeating the last frame received before the empty frame. If more than one consecutive empty frame had to be inserted, substituting will be done by copying the last received frame for each missing frame and decreasing the output level by 3 dB/frame. The output level scaling is done by scaling the codebook gains and by modifying the LSF parameters.

If the size of the jitter buffer is to be decreased with parametric audio signal coding, some number of frames are discarded. The gain parameters and Linear Predictive Coding (LPC) coefficients of the frames surrounding the discarded frame or frames can be modified to smoothly combine the frames surrounding the discarded frame or frames. Alternatively, the frame or frames can be discarded without any further amendments.

Also the fifth preferred embodiment for increasing and decreasing the jitter buffer size is intended for parametric audio data coding.

In the fifth preferred embodiment for increasing the jitter buffer size, additional data is interpolated from adjacent parametric coded audio data. In the fifth preferred embodiment for decreasing the jitter buffer size, the contained parametric coded audio data is reduced by interpolating selected audio data into less audio data. The selected audio data can be adjacent or spaced apart, in which case the data in between the selected data is discarded.

Also time scaling can be employed on parametric coded audio data.

While five different preferred basic embodiments of the invention were presented, numerous alternative or modified embodiments are included in the scope of the invention. In particular, the invention can be realized based on any other suitable time scaling and/or bad frame handling method for compensating for a change in the size of the jitter buffer.

For example, if time scaling is to employed, a first time scaling method can be employed for a time scale expansion and another method for a time scale compression.

While an increase of the jitter buffer size is preferably carried out immediately after an increase was determined to be necessary, a required decrease of the jitter buffer size can be postponed until a pause in speech appears, in case a Voice Activity Detector is available, since decreasing the jitter buffer size is not as time critical as increasing the jitter buffer size.

If a bad frame handling method is used, an existing bad frame handler can be used for dealing in addition with changes in the jitter buffer size.

BRIEF DESCRIPTION OF THE FIGURES

In the following, the invention is explained in more detail with reference to drawings, of which

Fig. 1     illustrates the principle of three embodiments of the invention for changing the jitter buffer size;
Fig. 2     shows diagrams illustrating an increase in jitter buffer size according to the first embodiment of the invention based on a method for bad frame handling;
Fig. 3     shows diagrams illustrating a decrease in jitter buffer size according to the first embodiment of the invention;
Fig. 4     shows diagrams illustrating the principle of a time domain time scaling according to a second embodiment of the invention is based;
Fig. 5     is a flow chart of the second embodiment of the invention;
Fig. 6     shows diagrams further illustrating the second embodiment of the invention;
Fig. 7     shows diagrams illustrating the principle of a third embodiment of the invention based on frequency domain time scaling;
Fig. 8     is a flow chart of the third embodiment of the invention;
Fig. 9     shows jitter buffer signals before and after time scaling according to the third embodiment of the invention;
Fig. 10    is a flow chart illustrating a fourth embodiment of the invention changing a jitter buffer size in the parametric domain;
Fig. 11    schematically shows a part of a first system in which the invention can be employed;
Fig. 12    schematically shows a part of a second system in which the invention can be employed; and
Fig. 13    schematically shows a part of a first system in which the invention can be employed.

DETAILED DESCRIPTION OF THE INVENTION

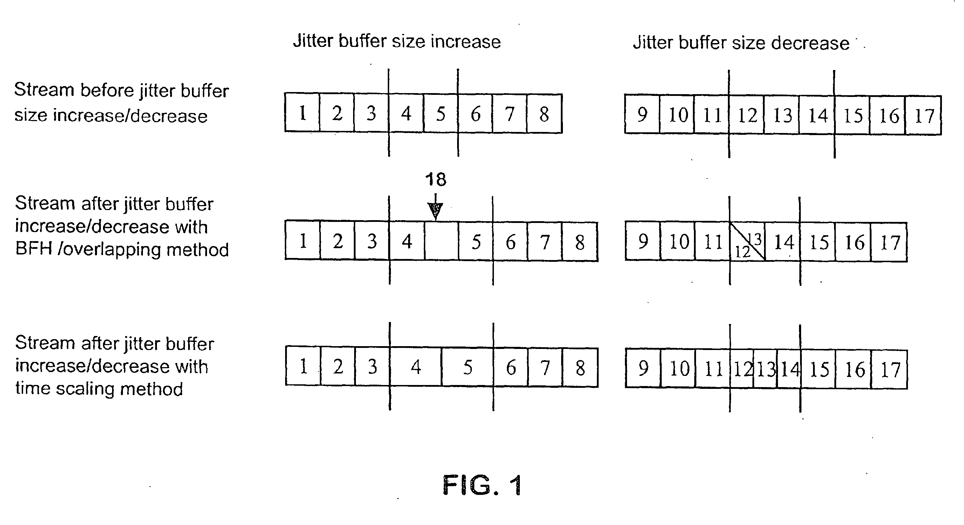

Figure 1 illustrates the basic principles of the first three embodiments of the invention that will be presented.

On the left hand side of the figure, an increase of a packet stream is shown, while on the left hand side, a decrease of a packet stream is shown. The upper part of the figure shows for both cases original streams, the middle part for both cases streams treated according to the first embodiment of the invention and the lower part for both cases streams treated according to the second or third embodiment of the invention.

In the upper left part of figure 1, a first packet stream with eight original packets 1 to 8 including speech data is indicated. This packet stream is contained in a jitter buffer of a receiving end in a voice over IP network before an increase of the jitter buffer size becomes necessary. In the upper right part of figure 1, a second packet stream with nine packets 9 to 17 including speech data is indicated. This packet streams is contained in a jitter buffer of a receiving end in a voice over IP network before a decrease of the jitter buffer size becomes necessary.

On the left hand side in the middle of figure 1, the first packet stream is shown after an increase of the jitter buffer size. The jitter buffer size was increased by providing an empty space of the length of one packet between the original packet 4 and the original packet 5 of the packet stream in the jitter buffer. This empty space is filled by a packet 18 generated according to a bad frame handling BFH as defined in the above mentioned ITU-T G.711 codec, the empty space simply being considered as lost packet. The size of the original stream is thus expanded by the length of one packet.

On the right hand side in the middle of figure 1, in contrast, the second packet stream is shown after a decrease of the jitter buffer size. It is realized in the first described embodiment by overlapping two consecutive packets, in this example, the original packet 12 and the original packet 13 of the second packet stream. The overlapping reduces the number of speech samples contained in the jitter buffer in the length of one packet, the size of which can thus be reduced by the length of one packet.

On the left hand side at the bottom of figure 1, the first packet stream is shown again after an increase of the jitter buffer size which resulted in an empty space of the length of one packet between the original packets 4 and 5 of the first packet stream. This time, however, the original packets 4 and 5 were time scaled in the time domain or in the frequency domain according to the second or third embodiment of the invention in order to fill the resulting empty space. That means the data of original packets 4 and 5 was expanded to fill the space of three instead of two packets. The size of the original stream was thus expanded by the length of one packet.

On the right hand side at the bottom of figure 1, finally, the second packet stream is shown again after a decrease of the jitter buffer size. The corresponding decrease of the data stream was realized according to the second or third embodiment by time scaling the data of three original packets to the length of two packets. In the presented example, the data of the original packets 12 to 14 of the second packet stream were condensed to the length of two packets. The size of the original stream was thus reduced by the length of one packet.

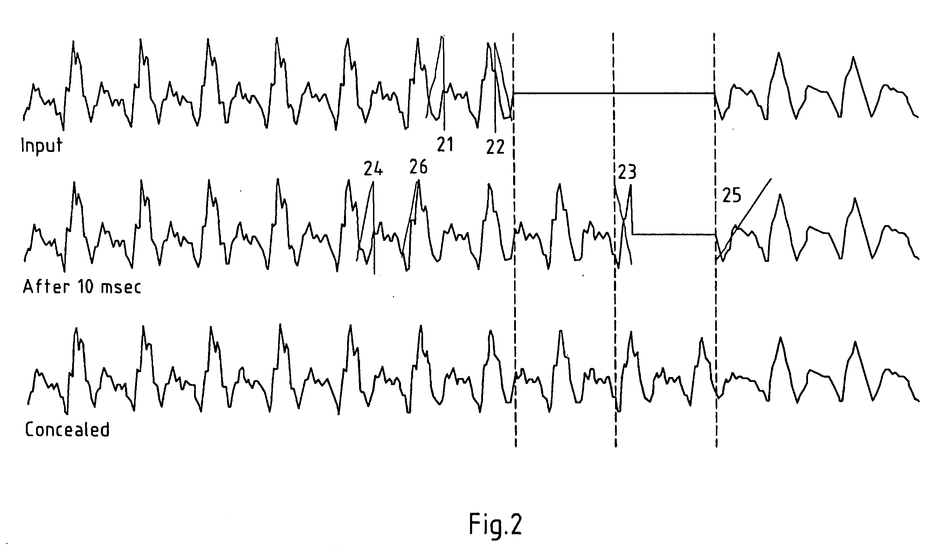

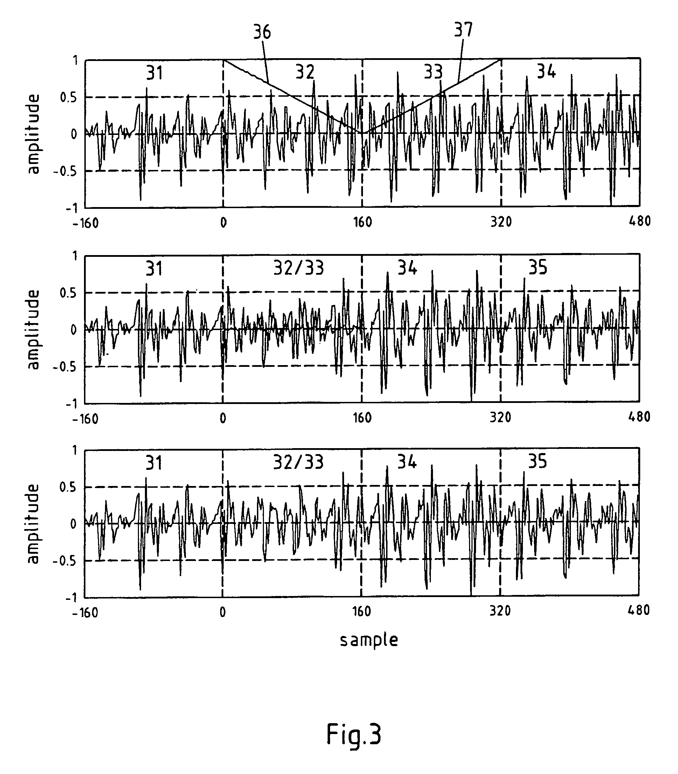

The increase and decrease of the jitter buffer size according to the first embodiment of the invention will now be explained in detail with reference to figures 2 and 3.

Figure 2 is taken from the ITU-T G.711 Appendix specification, where it is used for illustrating lost packet concealment, while here it is used for illustrating the first embodiment of the invention, in which the ITU-T bad frame handler is called between adjacent packets for compensating for an increase of the jitter buffer size.

Figure 2 shows three diagrams which depict the amplitude of signals over the sample number of the signals. In the first diagram the signals input to the jitter buffer are shown, while a second and third diagram show synthesized speech at two different points in time. The diagrams illustrate how the jitter buffer size is increased according to the first embodiment of the invention corresponding to a bad frame handling presented in the above cited ITU-T G.711 codec. As mentioned above, the cited standard describes a packet loss concealment method for the ITU-T G.711 codec based on pitch waveform replication.

The packet size employed in this embodiment is 20ms, which corresponds to 160 samples. The BFH was modified to be able to use 20 ms packets.

The arrived packets as well as the synthesised packets are saved in a history buffer of a length of 390 samples.

After an increase of the size of the jitter buffer by the length of two packets, there is an empty space in the jitter buffer corresponding to two lost packets, indicated in the first diagram of figure 2 by a horizontal line connecting the received signals. At the start of each empty space, the contents of the history buffer are copied to a pitch buffer that is used throughout the empty space to find a synthetic waveform that can conceal the empty space. In the situation in the first diagram, the samples that are to the left of the two empty packets i.e. the samples that have arrived before the increase of size, form the current content of the pitch buffer.

A cross-correlation method is now used to calculate a pitch period estimate from the pitch buffer. As illustrated in the second diagram of figure 2, the first empty packet is then replaced by replicating the waveform that starts one pitch period length back from the end of the history buffer, indicated with a vertical line referred to by 21, in the required number. To ensure a smooth transition between the real and the synthesized speech, as well as between repeated pitch period length waveforms, the last 30 samples in the history buffer, in the region limited by a vertical and an inclined line referred to by 22 in the first diagram, are overlap added with the 30 samples preceding the synthetic waveform in the region limited by the vertical line 21 and a connected inclined line. The overlapped signal replaces the last 30 samples 22 in the pitch buffer. This overlap add procedure causes an algorithmic delay of 3.75 ms, or 30 samples. In the same way, a smooth transition between repeated pitch period length waveforms is ensured.

The synthetic waveform is moreover extended beyond the duration of the empty packets to ensure a smooth transition between the synthetic waveform and the subsequently received signal. The length of the extension 23 is 4 ms. In the end of the empty space, the extension is raised by 4 ms per additional added empty packet. The maximum extension length is 10 ms. In the end of the empty space this extension is overlapped with the signal of the first packet after the empty space, the overlap region being indicated in the figure with the inclined line 25. The second diagram of figure 2 illustrates the state of the synthesized signal after 10 ms, when samples of one packet length have been replicated.

In case there is a second added empty packet, as in the first diagram of figure 2, another pitch period is added to the pitch buffer. Now the waveform to be replicated is two pitch periods long and starts from the vertical line referred to by 24. Next, the 30 samples 24 before the pitch buffer are overlap added with the last 30 samples 22 in the pitch buffer. Again, the overlapped signal replaces the last 30 samples in region 22 in the pitch buffer. A smooth transition between one and two pitch period length signals is ensured by performing an overlap add between the regions indicated by 23 and 26. Region 26 is placed by subtracting pitch periods until the pitch pointer is in the first wavelength of the currently used portion of the pitch buffer. The result of the overlap adding replaces the samples in region 23. The third diagram of figure 2 shows the synthesized signal in which an empty space of the length of two packets added for an increase in the size of the jitter buffer was concealed.

If the size of the jitter buffer is further increased, another pitch period would be added to the pitch buffer.

However, if the increase in jitter buffer size is large it is more likely that the replacement signal falsifies the original signal. Attenuation is used to diminish this problem. The first replacement packet is not attenuated. The second packet is attenuated with a linear ramp. The end of the packet is attenuated by 50 % compared to the start with the used packet size of 20 ms. This attenuation is also used for the following packets. This means that after 3 packets (60 ms) signal amplitude is zero.

Similarly, parametric speech coders' bad frame handling methods can be employed for compensating for an increase of the jitter buffer size.

Figure 3 illustrates how the jitter buffer size is decreased according to the first embodiment of the invention by overlapping two adjacent packets. To this end, the figure shows three diagrams depicting the amplitude of signals over the sample number of the signals.

The first diagram of figure 3 shows the signals of four packets 31-34 presently stored in a jitter buffer before a decrease in size, each packet containing 160 samples. Now, the size of the jitter buffer is to be decreased by one packet. To this end, two adjacent packets 32, 33 are multiplied with a downramp 36 and an upramp 37 function respectively, as indicated in the first diagram. Then, the multiplied packets 32, 33 of the signals are overlapped, which is shown in the second diagram of figure 3. Finally, the overlapped part of the signal 32/33 is added as shown in the third diagram of figure 3, the fourth packet now being formed by the packet 35 following the original fourth packet 34. The result of the overlap adding is a signal comprising one packet less than the original signal, and this removed packet enables a decrease of the size of the jitter buffer.

When the jitter buffer size is to be decreased by more than one packet at a time, not adjacent but spaced apart packets are overlap added, and the packets in between are discarded. For example, if the jitter buffer size is to be changed from three packets to one, the first packet in the jitter buffer is overlap added with the third packet in the jitter buffer as described for packets 32 and 33 with reference to figure 3, and the second packet is discard.

In a second embodiment of the invention, an immediate increase and decrease of a jitter buffer size is enabled by a time domain time scaling method, and more particularly by a waveform similarity overlap add (WSOLA) method described in the above mentioned document "An overlap-add technique based on waveform similarity (WSOLA) for high quality time-scale modification of speech".

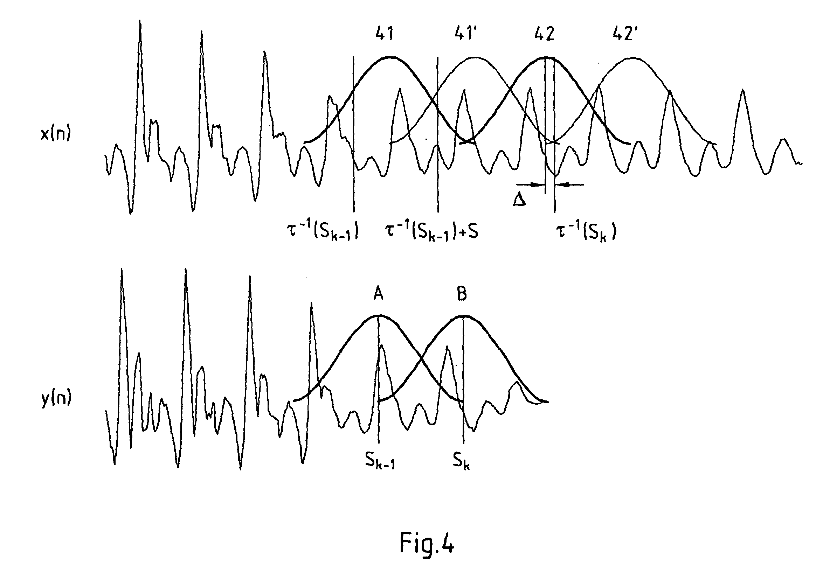

The WSOLA method is illustrated for an exemplary time scaling resulting in a reduction of samples of a signal in figure 4, which comprises in the upper part an original waveform x(n) and in the lower part a synthetic waveform y(n) constructed with suitable values of the original waveform x(n). n indicates the respective sample of the signals. The WSOLA method is based on constructing a synthetic waveform that maintains maximal local similarity to the original signal. The synthetic waveform y(n) and original waveform x(n) have maximal similarity around time instances specified by a time warping function $\tau^{-1}(n)$.

In figure 4, the input segment 41 of original waveform x(n) was the last segment excised from the original waveform x(n). This segment 41 is the last segment that was added as a synthesis segment A to the synthesized waveform y(n). Segment A was overlap-added to the output signal y(n) at time $S_{k-1}=(k-1)S$, S being the interval between segments in the synthesized signal y(n).

The next synthesis segment B is to be excised from the input signal x(n) around time instant $\tau^{-1}(S_k)$, and overlap added to the output signal y(n) at time $S_k=kS$. As can be seen in the figure, segment 41' of the input signal x(n) would overlap perfectly with segment 41 of the input signal x(n). Segment 41' is therefore used as a template when choosing a segment 42 around time instant $\tau^{-1}(S_k)$ of the input signal x(n) which is to be used as next synthesis segment B. A similarity measure between segment 41' and segment 42 is computed to find the optimal shifting value $\Delta$ that maximizes the similarity between the segments. The next synthesis segment B is thus selected by finding the best match 42 for the template 41' around time instant $\tau^{-1}(S_k)$. The best match must be within the tolerance interval of $\Delta$, which tolerance interval lies between a predetermined minimum $\Delta_{min}$ and a predetermined maximum $\Delta_{max}$ value. After overlap-adding the synthesis segment 42 to the output signal as segment B, segment 42' of the input signal x(n) is used as the next template.

The WSOLA method uses regularly spaced synthesis instants $S_k=kS$. The analysis and synthesis window length is constant. If the analysis/synthesis window is chosen in such a way that,

$$\sum_k v(n-kS) = 1 \qquad\qquad (1)$$

and if the analysis/synthesis window is symmetrical, the synthesis equation for the WSOLA method is

$$y(n) = \sum_k v(n-kS)x\left(n+\tau^{-1}(kS)-kS+\Delta_k\right). \qquad\qquad (2)$$

By selecting a different time warping function, the same method can be employed not only for reducing the samples of a signal but also for increasing the amount of samples of a signal.

It is important that the transition from the original signal to the time-scaled signal is smooth. In addition, the pitch period should not change during the jumps from the signal used as received to the time scaled signal. As was explained previously, WSOLA time scaling preserves the pitch period. However, when time scaling is performed for a part in the middle of the speech signal, some discontinuity on either the beginning, or the end of the time scaled signal can not be avoided sometimes.

In order to decrease the effect of such a phase mismatch, it is proposed for the second embodiment of the invention to slightly modify the method described with reference to figure 4. The modified WSOLA (MWSOLA) method uses history information and extra extension to decrease the effect of this problem.

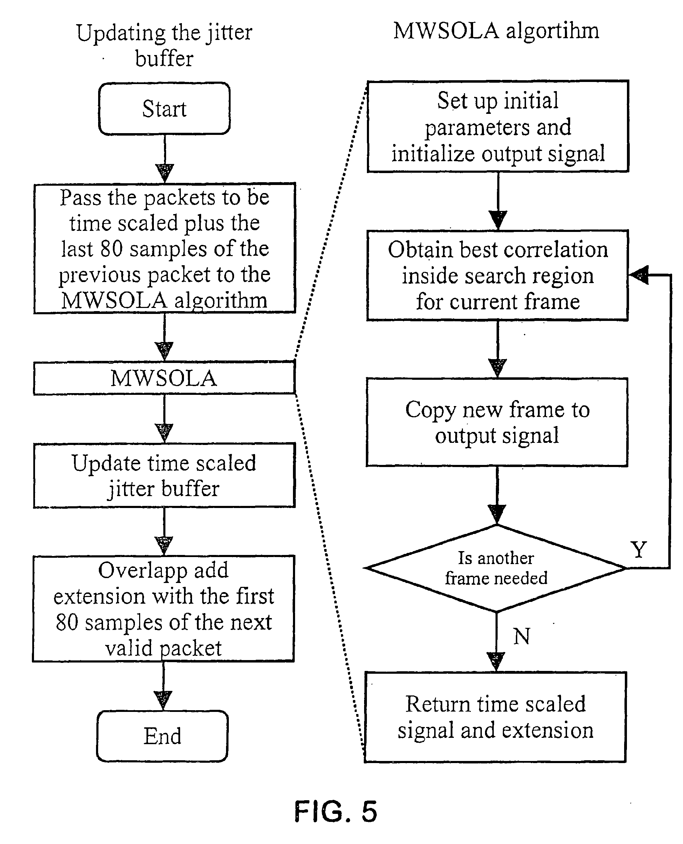

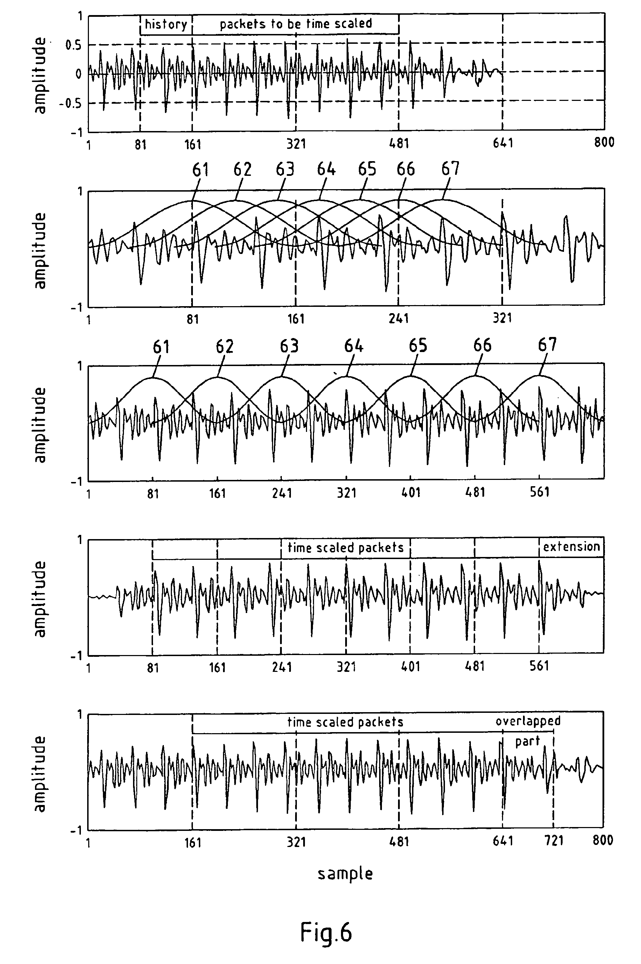

A MWSOLA algorithm using an extension of the time scale for an extra half of a packet length will now be described with reference to the flow chart of figure 5 and to the five diagrams of figure 6. The used packet size is 20 ms, or 160 samples, the sampling rate being 8 kHz. The analysis/synthesis window used has the same length as the packets.

Figure 5 illustrates the basic process of updating the jitter buffer size using the proposed MWSOLA algorithm. As shown on the left hand side of the flow chart of figure 5, first the packets to be time scaled are chosen. In addition, 1/2 packet length of the previously arrived signal, i.e. 80 samples, are selected as history samples. The selected samples are also indicated in the first diagram of figure 6. After being selected, they are forwarded to the MWSOLA algorithm.

The MWSOLA algorithm, which is shown in more detail on the right hand side of figure 5, is then used to provide the desired time scaling on the selected signals as described with reference to figure 4.

The analysis/synthesis window is created by modifying a Hanning window so that the condition of equation (1) is fulfilled. The time warping function $\tau^{-1}(n)$ is constructed differently for time scale expansion and compression, i.e. for an increase and for a decrease of the jitter buffer size. The time warping function and the limits of the search region $\Delta$ ($\Delta=[\Delta_{min}...\Delta_{max}]$) are chosen in such a way that a good signal variation is obtained. By setting the limits of the search region and the time warping function correctly, it can be avoided that adjacent analysis frames are chosen repeatedly. Finally, the first frame from the input signal is copied to an output signal which is to substitute the original signal. This ensures that the change from the preceding original signal to the time scaled signal is smooth.

After the initial parameters like the time warping function and the limits for the search region are set and an output signal is initialized, a loop is used to find new frames for the time scaled output signal as long as needed. A best match between the last L samples of the previous frame and the first L samples of the new frame is used as an indicator in finding the next frame. The used length L of the correlation is 1/2 * window length = 80 samples. The search region $\Delta$ ($\Delta=[\Delta_{min}...\Delta_{max}]$) should be longer than the maximum pitch period in samples, so that a correct synchronization between consecutive frames is possible.

The second diagram of figure 6 shows how the analysis windows 61-67 defining different segments are placed in the MWSOLA input signal when time scaling two packets to three packets.

The third diagram of figure 6 shows how overlapping the synthesis segments succeeded. As can be seen, the different windows 61-67 overlap, in this case, quite nicely.

Overlap adding of all the analysis/synthesis frames results in the time scaled signal shown in the fourth diagram of figure 6, which constitutes the output signal of the MWSOLA algorithm. The MWSOLA algorithm returns the new time scaled packets and an extension to be overlap added with the first 1/2 packet length of the next arriving packet.

As shown again on the left hand side of the flow chart of figure 5, the jitter buffer is then updated with the time scaled signals and the extension is overlap added with the next arriving packet. The resulting signal can be seen in the fifth diagram of figure 6.

This procedure decreases the effect of the phase and amplitude mismatches between the time-scaled signal and the valid signal.

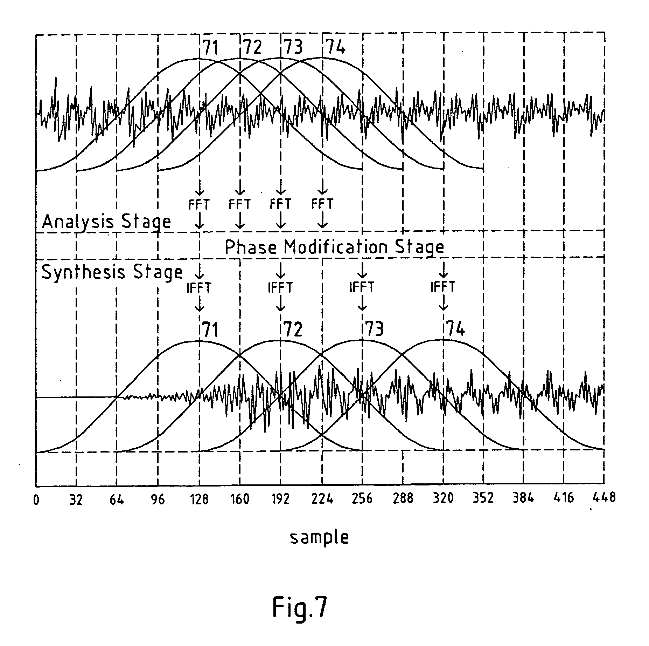

A phase vocoder based jitter buffer scaling method will now be described with reference to figures 7 to 9 as third embodiment of the invention. This method constitutes a frequency domain time scaling method.

The phase vocoder time scale modification method is based on taking short-time Fourier transforms (STFT) of the speech signal in the jitter buffer as described in the above mentioned document "Applications of Digital Signal Processing to Audio and Acoustics". Figure 7 illustrates this technique. The phase vocoder based time scale modification comprises an analyzing stage, indicated in the upper part of figure 7, a phase modification stage indicated in the middle of figure 7, and a synthesis stage indicated in the lower part of figure 7.

In the analyzing stage, short-time Fourier transforms are taken from overlapping windowed parts 71-74 of a received signal. In particular, discrete time Fourier transforms (DFT) as described by J. Laroche and M. Dolson in "Improved Phase Vocoder Time-Scale Modification of Audio", IEEE Transactions on Speech and Audio Processing, Vol. 7, No. 3, May 1999. pp. 323-332, can be employed in the phase vocoder analysis stage. This means that both, the frequency scale and the time scale representation of the signal, are discrete. The analysis time instants $t_a^u$ are regularly spaced by $R_a$ samples, $t_a^u = u*R_a$. $R_a$ is called the analysis hop factor. The short time Fourier transform is then

$$X\left(t_a^u,\Omega_k\right)=\sum_{n=-\infty}^{\infty}h(n)x\left(t_a^u+n\right)e^{-j\Omega_k n}\,,\qquad\qquad(3)$$

where x is the original signal, h(n) the analysis window and $\Omega_k=2pi*k/N$ the center frequency of the $k^{th}$ vocoder channel. The vocoder channels can also be called bins. N is the size of the DFT, where N must be longer than the length of the analysis window. In practical solutions, the DFT is usually obtained with the Fast Fourier Transform (FFT). The analysis window's cutoff frequency for the standard (Hanning, Hamming) windows requires the analysis windows to overlap by at least 75%. After the analysis FFT, the signal is represented by horizontal vocoder channels and vertical analysis time instants.

In the phase modification stage, the time scale of the speech signal is modified by setting the analysis hop factor $R_a$ different from a to be used synthesis hop factor $R_s$, as described in the mentioned document "Improved Phase Vocoder Time-Scale Modification of Audio". The new time-evolution of the sine waves is achieved by setting

$|Y(t_s^u,\ \Omega_k\ )| = |X(t_a^u,\Omega_k)|$ and by calculating new phase values for $Y(t_s^u,\ \Omega_k\ )$.

The new phase values for $Y(t_s^u,\ \Omega_k\ )$ are calculated as follows. A process called phase unwrapping is used, where the phase increment between two consecutive frames is used to estimate the instantaneous frequency of a nearby sinusoid in each channel k. First the heterodyned phase increment is calculated by

$$\Delta\Phi_k^u = \angle X\left(t_a^u,\Omega_k\right)-\angle X\left(t_a^{u-1},\Omega_k\right)-R_a\Omega_k\,.\qquad\qquad(4)$$

Then by adding or subtracting multiples of $2\pi$ so that the result of (7) lies between $\pm\pi$, the principal determination ($\Delta_p\Phi_k^u$) of the heterodyned phase increment is obtained. The instantaneous frequency is then calculated using

$$\omega_k\left(t_a^u\right)=\Omega_k+\frac{1}{R_a}\Delta_p\Phi_k^u\quad.\qquad\qquad(5)$$

The instantaneous frequency is determined because the FFT is calculated only for discrete frequencies $\Omega_k$. Thus the FFT does not necessarily represent the windowed signal exactly.

The time scaled phases of the STFT at a time $t_s^u$ are calculated from

$$\angle Y\left(t_s^u,\Omega_k\right)=\angle Y\left(t_s^{u-1},\Omega_k\right)+R_s\omega_k\left(t_a^u\right).\qquad\qquad(6)$$

The choice of initial synthesis phases $\angle Y\left(t_s^0,\Omega_k\right)$ is important for good speech quality. In the above mentioned document "Improved Phase Vocoder Time-Scale Modification of Audio", a standard initialization setting of

$$\angle Y\left(t_s^0,\Omega_k\right)=\angle X\left(t_a^0,\Omega_k\right)\qquad\qquad(7)$$

is recommended, which makes a switch from a non time scaled signal to a time scaled signal possible without phase discontinuity. This is an important attribute for jitter buffer time scaling.

After the phases values for $Y(t_s^u,\ \Omega_k\ )$ are obtained, the signal can be reconstructed in a synthesis stage.

In the synthesis stage, the modified short time Fourier transforms $Y(t_s^u,\Omega_k)$ are first inverse Fourier transformed with the equation

$$y_u(n) = \frac{1}{N} \sum_{k=0}^{N-1} Y\left(t_s^u, \Omega_k\right) e^{j\Omega_k n} . \qquad (8)$$

The synthesis time instants are set $t_s^u = u \star R_s$. Finally the short-time signals are multiplied by a synthesis window w(n) and are summed, together giving the output signal y(n):

$$y(n) = \sum_{u=-\infty}^{\infty} w\left(n - t_s^u\right) y_u\left(n - t_s^u\right) . \qquad (9)$$

The distance between the analysis windows is different from the distance between the synthesis windows due to the time scale modification, therefore a time extension or compression of the received jitter buffer data is achieved. Synchronisation between overlapping synthesis windows was achieved by modifying the phases in the STFT.

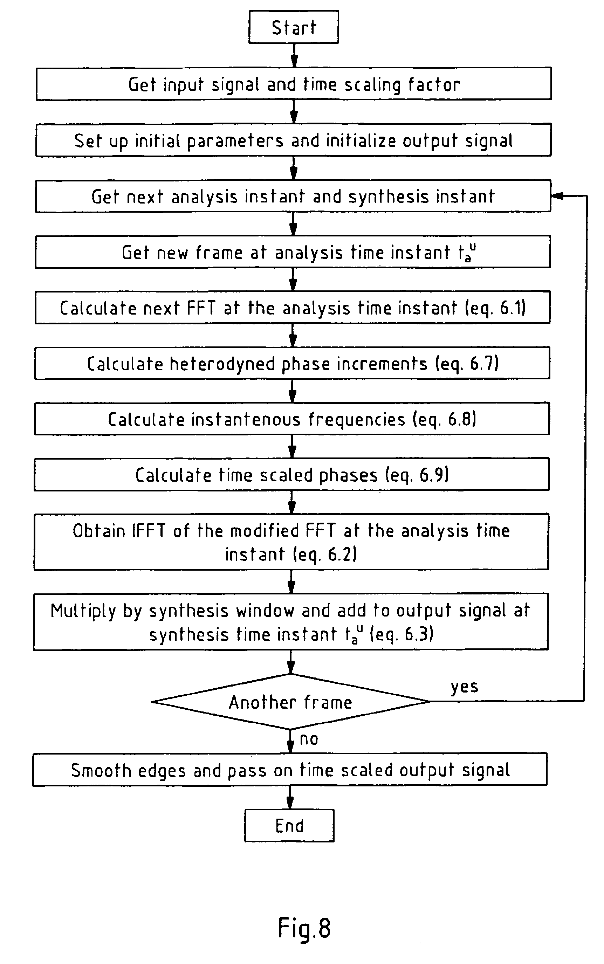

The use of the phase vocoder based time scaling for increasing or decreasing the size of a jitter buffer is illustrated in the flow chart of figure 8.

First, the input signal is received and a time scaling factor is set.

The algorithm is then initialized by setting analysis and synthesis hop sizes, and by setting the analysis and synthesis time instants. When doing this, a few constraints have to be taken into account, which have been listed e.g. in the above mentioned document "Applications of Digital Signal Processing to Audio and Acoustics". The cutoff frequency of the analysis window must satisfy $w_h < \min_i \Delta w_i$, i.e. the cutoff frequency must be less than the spacing between two sinusoids. Further, the length of the analysis window must be small enough so that the amplitudes and instantaneous frequencies of the sinusoids can be considered constants inside the analysis window. Finally, to enable phase unwrapping, the cutoff frequency and the analysis rate must satisfy $w_h Ra < \pi$. The cutoff frequency for standard analysis windows (Hamming, Hanning) is $w_h \approx 4\pi/Nw$, where Nw is the length of the analysis window.

As further initial parameter, the number of frames to process is calculated. This number is used to determine how many times the following loop in figure 8 must be processed. Finally, initial synthesis phases are set, according to equation (7).

After initialization, a vocoder processing loop follows for the actual time scaling. Inside the phase vocoder processing loop, the routine is a straightforward realization of the method presented above. First, the respective next analysis frame is obtained by multiplying the signal with the analysis window at time instant $t_a^u$. Then the FFT of the frame is calculated. The heterodyned phase increment is calculated by setting $R_a$ in equation (4) to $t_a^u - t_a^{u-1}$. Instantaneous frequencies are also obtained by setting $R_a$ in equation (5) to $t_a^u - t_a^{u-1}$. The time scaled phases are obtained from equation (6). Next, the IFFT of the modified FFT of the current frame is calculated according to equation (8). The result of equation (8) is then multiplied by the synthesis window and added to the output signal. Before going through the loop again, the previous analysis and synthesis phases to be used in equations (4) and (6) are updated.

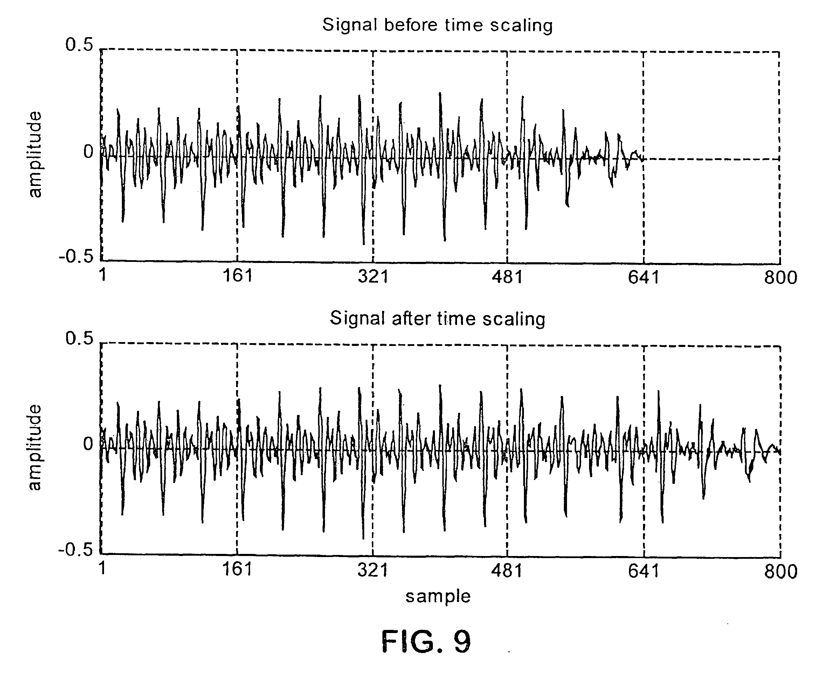

Finally, before outputting the time scaled signal, transitions between the time scaled and the non time scaled signal are smoothed. After this, the jitter buffer size modification can be completed. Figure 9 shows the resulting signal when time scaling two packets into three with the phase vocoder based time scaling. In a first diagram of figure 9, the amplitude of the signal over the samples before time scaling is depicted. In a second diagram of figure 9, the amplitude of the signal over the samples after time scaling is depicted. The two packets with samples 161 to 481 in the first diagram were expanded to three packets with samples 161 to 641.

Before the jitter buffer size is increased, an error concealment should be performed. Moreover, a predetermined number of packets should be received before the jitter buffer size is increased.

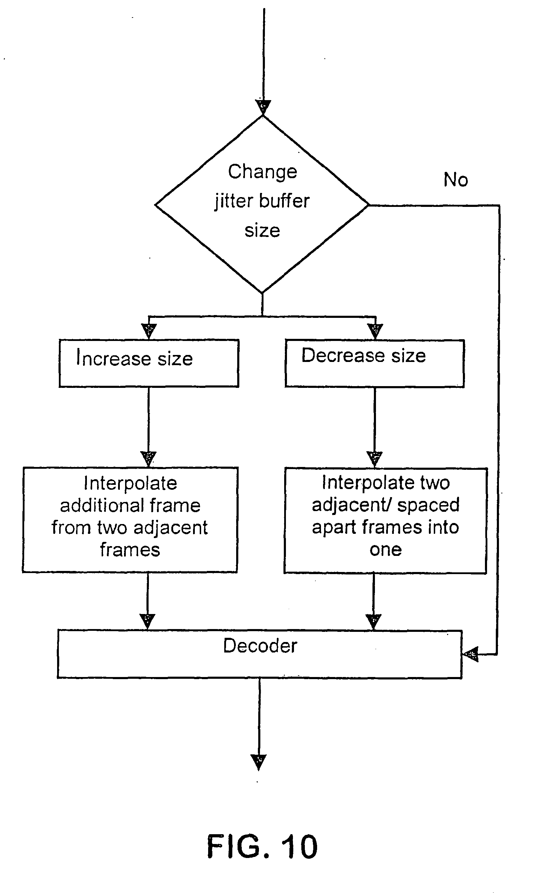

Figure 10 is a flow chart illustrating a fourth embodiment of the invention, which can be used for changing a jitter buffer size in the parametric domain. The parametric coded speech frames are only decoded by a decoder after buffering in the jitter buffer.

In a first step, it is determined whether the jitter buffer size has to be changed. In case it does not have to be changed, the contents of the jitter buffer are directly forwarded to the decoder.

In case it is determined that the jitter buffer size has to be increased, the jitter buffer is increased and additional frames are generated by interpolating an additional frame from two adjacent frames in the parametric domain. The additional frames are used for filling the empty buffer space resulting from an increase in size. Only then the buffered frames are forwarded to the decoder.

In case it is determined that the jitter buffer size has to be decreased, the jitter buffer is decreased and two adjacent or spaced apart frames are interpolated in the parametric domain into one frame. The distance of the two frames used for interpolation to each other depends on the amount of the required decrease of the jitter buffer size. Only then the buffered frames are forwarded to the decoder.

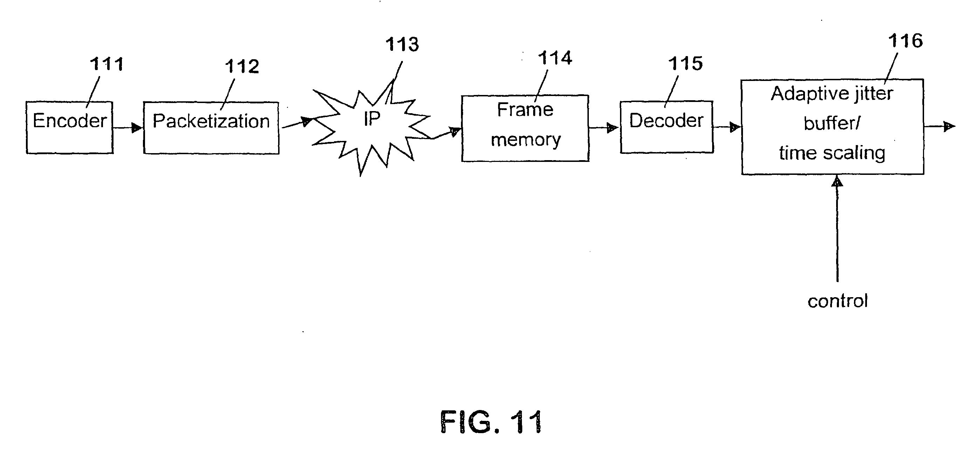

Figures 11 to 13 shows parts of three different voice over IP communications systems in which the invention might be employed.

In the communications system of Figure 11, an encoder 111 and packetization means 112 belong to a transmitting end of the system. The transmitting end is connected to a receiving end via a voice over IP network 113. The receiving end comprises a frame memory 114, which is connected via a decoder 115 to an adaptive jitter buffer 116. The adaptive jitter buffer 116 further has a control input connected to control means and an output to some processing means of the receiving end which are not depicted.

At the transmitting end, speech that is to be transmitted is encoded in the encoder 111 and packetized by the packetization means 112. Each packet is provided with information about its correct position in a packet stream and about the correct distance in time to the other packets. The resulting packets are sent over the voice over IP network 113 to the receiving end.

At the receiving end, the received packets are first reordered in the frame memory 114 in order to bring them again into the original order in which they were transmitted by the transmitting end. The reordered packets are then decoded by the decoder 115 into linear PCM speech. The decoder 115 also performs a bad frame handling on the decoded data. After this, the linear PCM speech packets are forwarded by the decoder 115 to the adaptive jitter buffer 116. In the adaptive jitter buffer, a linear time scaling method can then be employed to increase or decrease the size of the jitter buffer and thereby get more time or less time for the packets to arrive to the frame memory.

The control input of the adaptive jitter buffer 116 is used for indicating to the adaptive jitter buffer 116 whether the size of the jitter buffer 116 should be changed. The decision on that is taken by control means based on the evaluation of the current overall delay and the current variation of delay between the different packets. The control means indicate more specifically to the adaptive jitter buffer 116 whether the size of the jitter buffer 116 is to be increased or decreased and by which amount and which packets are to be selected for time scaling.

In case the control means indicate to the adaptive jitter buffer 116 that its size is to be changed, the adaptive jitter buffer 116 time scales at least part of the presently buffered packets according to the received information, e.g. in a way described in the second or third embodiment. The jitter buffer 116 is therefore extended by time scale expansion of the currently buffered speech data and reduced by time scale compression of the currently buffered speech data. Alternatively, a method based on a bad frame handling method for increasing the buffer size could be employed for changing the jitter buffer size. This alternative method could for example be the method of the first embodiment of the invention, in which moreover data is overlapped for decreasing the buffer size.

The linear time scaling of Figure 11 can be employed in particular for a low bit rate codec.

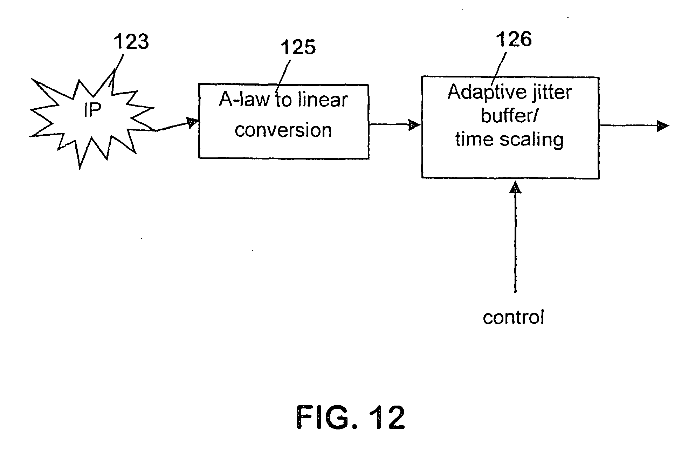

Figure 12 shows a part of a communications system which is based on a linear PCM speech time scaling method. In this system, a transmitting end which corresponds to the one in figure 11 and which is not depicted in figure 12, is connected again via a voice over IP network 123 to the receiving end. The receiving end, however, is designed somewhat differently from the receiving end in the system of figure 11. The receiving end comprises now means for A-law to linear conversion 125 connected to an adaptive jitter buffer 126. The adaptive jitter buffer 126 has again additionally a control input connected to control means and an output to some processing means of the receiving end which are not depicted.

Packets containing speech data which were transmitted by the transmitting end and received by the receiving end via the voice over IP network 123 are first input to the means for A-law to liner conversion 125 of the receiving end, where they are converted to linear PCM data. Subsequently, the packets are reorganized in the adaptive jitter buffer 126. Moreover, the adaptive jitter buffer 126 takes care of a bad frame handling, before forwarding the packets with a correct delay to the processing means.

Control means are used again for deciding when and how to change the jitter buffer size. Whenever necessary, some time scaling method for linear speech, e.g. one of the presented methods, is then used in the adaptive jitter buffer 126 to change its size according to the information received by the control means. Alternatively, a method based on a bad frame handling method could be employed again for changing the jitter buffer, e.g. the method of the first embodiment of the invention. This alternative method could also make use of the bad frame handling method implemented in the jitter buffer anyhow for bad frame handling.

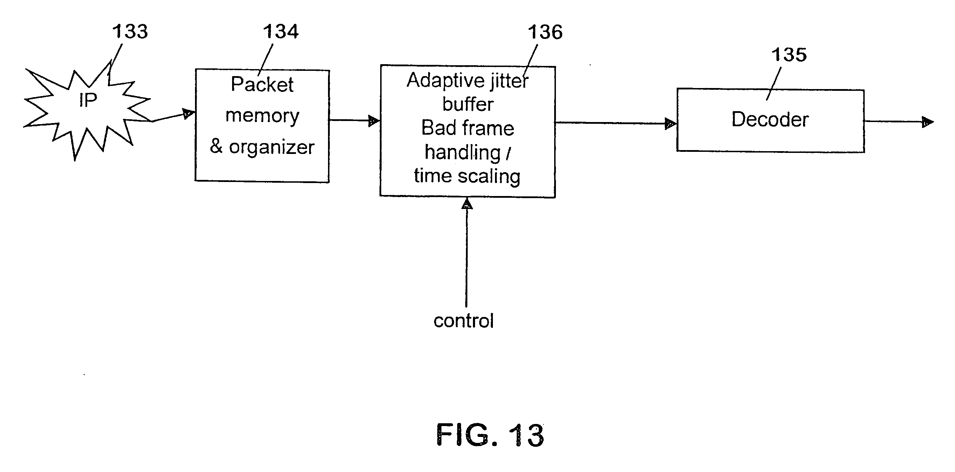

Figure 13, finally, shows a part of a communications system in which a low bit rate codec and a parametric domain time scaling is employed.

Again, a transmitting end corresponding to the one in figure 11 and not being depicted in figure 13, is connected via a voice over IP network 133 to a receiving end. The receiving end comprises a packet memory and organizer unit 134, which is connected via an adaptive jitter buffer 136 to a decoder 135. The adaptive jitter buffer 136 further has a control input connected to control means, and the output of the decoder 135 is connected to some processing means of the receiving end, both, control means and processing means not being depicted.

Packets containing speech data which were transmitted by the transmitting end and received by the receiving end via the voice over IP network 133 are first reordered in the packet memory and organizer unit 134.

The reordered packets are then forwarded directly to the adaptive jitter buffer 136. The jitter buffer 136 applies a bad frame handling on the received packets in the parametric domain. The speech contained in the packets is decoded only after leaving the adaptive jitter buffer 136 in the decoder 135.

As in the other two presented systems, the control means are used for deciding when and how to change the jitter buffer size. Whenever necessary, some time scaling method for parametric speech is then used in the adaptive jitter buffer 136 to change its size according to the information received by the control means. Alternatively, also a bad frame handling method designed for bad frame handling of packets in the parametric domain could be employed for increasing the jitter buffer size. As further alternative, additional frames could be interpolated from two adjacent frames as proposed with reference to figure 10. Decreasing the jitter buffer size could be achieved by discarding a packet or by interpolating two packets into one in the parametric domain as proposed with reference to figure 10. In particular, if a decrease by more than one packet is desired, the packets around the desired amount of packets could be interpolated into one packet.

**Claims**

1.  Method for changing the size of a jitter buffer (116;126;136), which jitter buffer (116;126;136) is employed at a receiving end in a communications system including a packet network (113;123;133) for buffering received packets containing audio data in order to enable a compensation of varying delays of said received packets, **characterized by** the steps of:

    - determining whether a current jitter buffer size should be increased or decreased by evaluating current overall delay and jitter in received packets; and
    - in case it was determined that the current jitter buffer size is to be increased, increasing the jitter buffer size and compensating the resulting empty jitter buffer space by generating additional data based on audio data contained in received packets.

2.  Method according to claim 1, wherein in case it was determined that the current jitter buffer size is to be decreased, decreasing the jitter buffer size by condensing at least part of the audio data currently present in the jitter buffer (116;126;136).

3.  Method according to one of the preceding claims, wherein the audio data buffered in the jitter buffer (116;126) is decoded audio data.

4.  Method according to one of the preceding claims, wherein said additional data is generated by treating said empty jitter buffer space as lost frames and by compensating said empty jitter buffer space by a bad frame handling.

5.  Method according to one of the preceding claims, wherein additional data is generated by replicating a waveform that starts a whole multitude of pitch period lengths before a point of time at which said additional data is to be added.

6.  Method according to one of the preceding claims, wherein said additional data is generated to overlap part of received audio data in the jitter buffer (116;126;136).

7.  Method according to one of the preceding claims, wherein at least part of said additional data is attenuated in case more than a predetermined amount of additional data is generated.

8.  Method according to one of the preceding claims, wherein data is condensed by overlapping the audio data of a selected first packet (32) and the audio data of a selected second packet (33) and by discarding the packets in between said first and said second packet (32,33).

9.  Method according to claim 8, wherein audio data is overlapped by multiplying the audio data of a selected first packet (32) with a downramp function (36) and the audio data of a selected second packet (33) with an upramp function (37), by adding the multiplied data of said first and said second packet (32,33), and by discarding the packets in between said first and said second packet (32,33).

10. Method according to one of claims 1 to 3, wherein for changing the jitter buffer size, additional data is generated and/or audio data in said jitter buffer (116;126;136) is condensed by a time domain time scaling performed on at least part of the audio data currently buffered in the jitter buffer (116;126;136) for expanding or compressing said at least part of the audio data respectively.

11. Method according to claim 10, wherein the time domain time scaling comprises

    a) selecting received audio data currently buffered in the jitter buffer (116;126;136), which audio data is to be used for time scaling;
    b) applying a time domain time scaling method on the selected audio data for obtaining time scaled audio data; and
    c) substituting in the jitter buffer (116;126;136) the time scaled audio data for at least part of the selected received audio data.

12. Method according to claim 11, wherein the time scaling applied to selected received audio data is extended for a predetermined length surpassing the length to be used for substituting received audio data in the jitter buffer (116; 126;136), which extension is overlapped with the following received audio data.

13. Method according to one of claims 10 to 12, wherein the time domain time scaling is based on a waveform similarity overlap add (WSOLA) method.

14. Method according to one of claims 1 to 3, wherein for changing the jitter buffer size additional data is generated and/or audio data in said jitter buffer (116;126;136) is condensed by a frequency domain time scaling performed on at least part of the audio data currently buffered in the jitter buffer (116;126;136) for expanding or compressing said at least part of the audio data respectively.

15. Method according to claim 14, wherein the frequency domain time scaling comprises:

    - Fourier transforming overlapping windowed parts (71-74) of at least part of the received audio data currently contained in the jitter buffer (116;126:136);
    - time scale modifying the Fourier transformed audio data of each window (71-74) according to a required amount of increase or decrease of the jitter buffer size; and
    - inverse Fourier transforming the Fourier transformed and time scale modified audio data of each window (71-74).

16. Method according to claim 14 or 15, wherein the frequency domain time scaling is phase vocoder based.

17. Method according to one of claims 1 to 2, wherein the audio data buffered in the jitter buffer (136) is parametric coded audio data.

18. Method according to claim 17, wherein for increasing the jitter buffer size additional data is generated by using a bad frame handler (136).

19. Method according to claim 17 or 18, wherein for decreasing the jitter buffer size the audio data in the jitter buffer is condensed by discarding at least one frame in the jitter buffer (136).

20. Method according to claim 19, wherein gain parameters and Linear Predictive Coding (LPC) coefficients of the frames surrounding the at least one discarded frame are modified to smoothly combine the frames surrounding the at least one discarded frame.

21. Method according to claim 17, wherein for increasing the jitter buffer size, additional audio data is interpolated from adjacent data.

22. Method according to claim 17, wherein for decreasing the jitter buffer size, selected adjacent or spaced apart audio data is interpolated into reduced audio data.

23. Communications system comprising a packet network (113;123;133) and at least one possible receiving end, the receiving end including:

- a jitter buffer (116;126;136) for buffering received packets containing audio data; and
- processing means for compensating varying delays of received packets buffered in said jitter buffer (116;126; 136);

**characterized in that** the receiving end further includes:

- processing means for determining whether the size of said jitter buffer (116;126;136) should be increased or decreased based on the current overall delay and the current variation of delay between the different packets; and
- processing means (116;126;136) for changing the current size of said jitter buffer (116;126;136) according to the method of one of claims 1 to 22.

24. Communications system according to claim 23, wherein the receiving end further includes a bad frame handler (115;126;136) for compensating packets lost during transmission to said receiving end, which bad frame handler (115;126;136) is moreover employed for generating additional data for an increase of the jitter buffer size by the processing means for changing the current size of said jitter buffer (116; 126; 136).

25. Processing means (116;126;136) for a receiving end of a communications system including a packet network (113; 123;133), **characterized in that** said processing means (116;126;136) are designed for changing the current size of a jitter buffer (116;126;136) according to the method of one of claims 1 to 22.

26. Receiving end for a communications system including a packet network (113;123;133), which receiving end comprises:

- a jitter buffer (116;126;136) for buffering received packets containing audio data;
- processing means for compensating varying delays of received packets buffered in said jitter buffer (116;126; 136);
- processing means for determining whether the size of said jitter buffer (116;126;136) should be increased or decreased based on the current overall delay and the current variation of delay between the different packets; and
- processing means (116;126;136) according to claim 25.

27. Receiving end according to claim 26, further including a bad frame handler (126;136) for compensating packets lost during transmission to said receiving end, which bad frame handler (126;136) is moreover employed for generating additional data for an increase of the jitter buffer size by the processing means (126;136) for changing the current size of said jitter buffer (126;136).

**Patentansprüche**

1. Verfahren zum Verändern der Größe eines Jitterpuffers (116; 126; 136), der am Empfangsende in einem Kommunikationssystem mit einem Paketnetz (113; 123; 133) zum Puffern empfangener, Audiodaten enthaltender Pakete verwendet wird, damit variierende Verzögerungen der genannten empfangenen Pakete kompensiert werden können, **gekennzeichnet durch** die folgenden Schritte:

- Ermitteln, ob eine aktuelle Jitterpuffergröße erhöht oder verringert werden sollte, **durch** Auswertung der aktuellen Gesamtverzögerung und des Jitters in empfangenen Paketen; und
- falls ermittelt wird, dass die aktuelle Jitterpuffergröße erhöht werden sollte,, Erhöhen der Jitterpuffergröße und Kompensieren des resultierenden leeren Jitterpufferraums **durch** Erzeugen zusätzlicher Daten auf der Basis von in empfangenen Paketen enthaltenen Audiodaten.

2. Verfahren nach Anspruch 1, bei dem, wenn ermittelt wurde, dass die aktuelle Jitterpuffergröße verringert werden soll, der Jitterpuffer durch Kondensieren von wenigstens einem Teil der gerade im Jitterpuffer (116; 126; 136) vorhandenen Audiodaten verkleinert wird.

3. Verfahren nach einem der vorherigen Ansprüche, wobei die im Jitterpuffer (116; 126) gepufferten Audiodaten decodierte Audiodaten sind.

**4.** Verfahren nach einem der vorherigen Ansprüche, bei dem die genannten zusätzlichen Daten erzeugt werden, indem der genannte leere Jitterpufferraum als verlorene Frames behandelt und der genannte leere Jitterpufferraum durch ein Bad-Frame-Handling kompensiert wird.

**5.** Verfahren nach einem der vorherigen Ansprüche, bei dem zusätzliche Daten durch Replizieren einer Wellenform erzeugt werden, die ein ganzes Vielfaches von Tonlagenperiodenlängen vor einem Zeitpunkt beginnt, an dem die genannten zusätzlichen Daten hinzugefügt werden sollen.

**6.** Verfahren nach einem der vorherigen Ansprüche, bei dem die genannten zusätzlichen Daten so erzeugt werden, dass sie einen Teil der empfangenen Audiodaten im Jitterpuffer (116; 126; 136) überlappen.

**7.** Verfahren nach einem der vorherigen Ansprüche, bei dem wenigstens ein Teil der genannten zusätzlichen Daten gedämpft wird, falls mehr als eine vorbestimmte Menge an zusätzlichen Daten erzeugt wird.

**8.** Verfahren nach einem der vorherigen Ansprüche, bei dem die Daten durch Überlappen der Audiodaten eines gewählten ersten Pakets (32) und der Audiodaten eines gewählten zweiten Pakets (33) und durch Verwerfen der Pakete zwischen dem genannten ersten und dem genannten zweiten Paket (32, 33) kondensiert werden.

**9.** Verfahren nach Anspruch 8, bei dem Audiodaten überlappt werden durch Multiplizieren der Audiodaten eines gewählten ersten Pakets (32) mit einer Downramp-Funktion (36) und der Audiodaten eines gewählten zweiten Pakets (33) mit einer Upramp-Funktion (37), durch Addieren der multiplizierten Daten des genannten ersten und des genannten zweiten Pakets (32, 33) und durch Verwerfen der Pakete zwischen dem genannten ersten und dem genannten zweiten Paket (32, 33).

**10.** Verfahren nach einem der Ansprüche 1 bis 3, wobei zum Verändern der Jitterpuffergröße mittels einer zeitbereich-zeitskalierung zusätzliche Daten erzeugt und/oder Audiodaten in dem genannten Jitterpuffer (116; 126; 136) kondensiert werden, und wobei die zeitbereich-Zeitskalierung auf wenigstens einen Teil der gerade im Jitterpuffer (116; 126; 136) gepufferten Audiodaten zum Expandieren bzw. Komprimieren wenigstens des genannten Teils der Audiodaten angewendet wird.

**11.** Verfahren nach Anspruch 10, wobei die Zeitbereich-Zeitskalierung Folgendes beinhaltet:

a) Auswählen von empfangenen, gerade im Jitterpuffer (116; 126; 136) gepufferten Audiodaten, die für die Zeitskalierung verwendet werden sollen;
b) Anwenden einer Zeitbereich-Zeitskalierungsmethode auf die ausgewählten Audiodaten zum Erhalten der zeitskalierten Audiodaten; und
c) Ersetzen wenigstens eines Teils der ausgewählten empfangenen Audiodaten im Jitterpuffer (116; 126; 136) durch die zeitskalierten Audiodaten.

**12.** Verfahren nach Anspruch 11, wobei die auf ausgewählte empfangene Audiodaten angewandte Zeitskalierung für eine vorbestimmte Länge erweitert wird, die die zum Ersetzen der empfangenen Audiodaten im Jitterpuffer (116; 126; 136) zu verwendende Länge überschreitet, wobei die Erweiterung mit den folgenden empfangenen Audiodaten überlappt wird.

**13.** Verfahren nach einem der Ansprüche 10 bis 12, wobei die Zeitbereich-Zeitskalierung auf einem WSOLA-(Waveform Similarity Overlap Add)-Verfahren basiert.

**14.** Verfahren nach einem der Ansprüche 1 bis 3, wobei zum Verändern der Jitterpuffergröße mittels einer Frequenzbereich-Zeitskalierung zusätzliche Daten erzeugt und/oder Audiodaten in dem genannten Jitterpuffer (116; 126; 136) kondensiert werden, und wobei die Frequenzbereich-Zeitskalierung auf wenigstens einen Teil der gerade im Jitterpuffer (116; 126; 136) gepufferten Audiodaten zum Expandieren bzw. Komprimieren von wenigstens dem genannten Teil der Audiodaten angewendet wird.

**15.** Verfahren nach Anspruch 14, wobei die Frequenzbereich-Zeitskalierung Folgendes beinhaltet:

- Fourier-Transformieren von überlappenden, in Fenster eingeteilten Teilen (71-74) von wenigstens einem Teil der empfangenen, gerade im Jitterpuffer (116; 126; 136) enthaltenen Audiodaten;
- Zeitskala-Modifizieren der Fourier-transformierten Audiodaten jedes Fensters (71-74) gemäß einem benötigten Betrag an Vergrößerung oder Verkleinerung des Jitterpuffers; und
- Inverses Fourier-Transformieren der Fourier-transformierten und Zeitskala-modifizierten Audiodaten jedes Fensters (71-74).

**16.** Verfahren nach Anspruch 14 oder 15, wobei die Frequenzbereich-Zeitskalierung Phasen-Vocoder basiert ist.

**17.** Verfahren nach einem der Ansprüche 1 bis 2, wobei die im Jitterpuffer (136) gepufferten Audiodaten parametrische codierte Audiodaten sind.

**18.** Verfahren nach Anspruch 17, wobei zum Vergrößern des Jitterpuffers zusätzliche Daten mit Hilfe eines Bad-Frame-Handlers (136) erzeugt werden.

**19.** Verfahren nach Anspruch 17 oder 18, wobei zum Verkleinern des Jitterpuffers die Audiodaten im Jitterpuffer durch Verwerfen von wenigstens einem Frame im Jitterpuffer (136) kondensiert werden.

**20.** Verfahren nach Anspruch 19, wobei Verstärkungsparameter und LPC-(Linear Predictive Coding)-Koeffizienten der Frames um den wenigstens einen verworfenen Frame herum so modifiziert werden, dass sie die Frames um den wenigstens einen verworfenen Frame herum glatt verbinden.

**21.** Verfahren nach Anspruch 17, wobei zum vergrößern des Jitterpuffers zusätzliche Audiodaten aus benachbarten Daten interpoliert werden.

**22.** Verfahren nach Anspruch 17, wobei zum Verkleinern des Jitterpuffers ausgewählte benachbarte oder beabstandete Audiodaten zu reduzierten Audiodaten interpoliert werden.

**23.** Kommunikationssystem, das ein Paketnetz (113; 123; 133) und wenigstens ein mögliches Empfangsende umfasst, wobei das Empfangsende Folgendes beinhaltet:

- einen Jitterpuffer (116; 126; 136) zum Puffern von empfangenen Paketen, die Audiodaten enthalten; und
- Verarbeitungsmittel zum Kompensieren variierender Verzögerungen von empfangenen Paketen, die in dem genannten Jitter-Puffer (116; 126; 136) gepuffert werden;

**dadurch gekennzeichnet, dass** das Empfangsende ferner Folgendes beinhaltet:

- Verarbeitungsmittel zum Ermitteln, ob der genannte Jitterpuffer (116; 126; 136) vergrößert oder verkleinert werden sollte, auf der Basis der aktuellen Gesamtverzögerung und der aktuellen Verzögerungsvariation zwischen den unterschiedlichen Paketen; und
- Verarbeitungsmittel (116; 126; 136) zum Verändern der aktuellen Größe des genannten Jitterpuffers (116; 126; 136) mit dem Verfahren nach einem der Ansprüche 1 bis 22.

**24.** Kommunikationssystem nach Anspruch 23, wobei das Empfangsende ferner einen Bad-Frame-Handler (115; 126; 136) zum Kompensieren von Paketen beinhaltet, die bei der Übertragung zum genannten Empfangsende verloren gegangen sind, wobei der Bad-Frame-Handler (115; 126; 136) darüber hinaus zum Erzeugen zusätzlicher Daten zum Vergrößern des Jitterpuffers durch das Verarbeitungsmittel zum Verändern der aktuellen Größe des genannten Jitterpuffers (116; 126; 136) verwendet wird.

**25.** Verarbeitungsmittel (116; 126; 136) für ein Empfangsende eines Kommunikationssystems mit einem Paketnetz (113; 123; 133), **dadurch gekennzeichnet, dass** die genannten Verarbeitungsmittel (116; 126; 136) zum Verändern der aktuellen Größe eines Jitterpuffers (116; 126; 136) mit dem Verfahren nach einem der Ansprüche 1 bis 22 ausgelegt sind.

**26.** Empfangsende für ein Kommunikationssystem mit einem Paketnetz (113; 123; 133), wobei das Empfangsende Folgendes beinhaltet:

- einen Jitterpuffer (116; 126; 136) zum Puffern empfangener Pakete, die Audiodaten enthalten;
- Verarbeitungsmittel zum Kompensieren variierender Verzögerungen von empfangenen Paketen, die in dem genannten Jitterpuffer (116; 126; 136) gepuffert werden;
- verarbeitungsmittel zum Ermitteln, ob der genannte Jitterpuffer (116; 126; 136) vergrößert oder verkleinert werden sollte, auf der Basis der aktuellen Gesamtverzögerung und der aktuellen Verzögerungsvariation zwischen den unterschiedlichen Paketen; und
- verarbeitungsmittel (116; 126; 136) nach Anspruch 25.

**27.** Empfangsende nach Anspruch 26, das ferner einen Bad-Frame-Handler (126; 136) zum Kompensieren von Paketen beinhaltet, die bei der Übertragung zum genannten Empfangsende verloren gegangen sind, wobei der Bad-Frame-Handler (126; 136) darüber hinaus zum Erzeugen zusätzlicher Daten für eine Vergrößerung des Jitterpuffers durch das verarbeitungsmittel (126; 136) zum Verändern der aktuellen Größe des genannten Jitterpuffers (126; 136) verwendet wird.

**Revendications**

**1.** Procédé de changement de la taille d'un tampon de gigue (116 ; 126 ; 136), lequel tampon de gigue (116 ; 126 ; 136) est utilisé au niveau d'une extrémité de réception dans un système de communication comprenant un réseau à commutation de paquets (113 ; 123 ; 133) pour mettre en mémoire tampon les paquets reçus contenant des données audio afin de permettre une compensation des retards variables desdits paquets reçus, **caractérisé par** les étapes consistant à :

- déterminer si la taille courante d'un tampon de gigue devrait être accrue ou diminuée en évaluant le retard global courant et la gigue dans les paquets reçus ; et
- dans le cas où on déterminerait que la taille courante du tampon de gigue doit être accrue, augmenter la taille du tampon de gigue et compenser l'espace vide du tampon de gigue qui en résulte en générant des données supplémentaires en se basant sur les données audio contenues dans les paquets reçus.

**2.** Procédé selon la revendication 1, dans lequel dans le cas où on déterminerait que la taille courante du tampon de gigue doit être diminuée, il faut diminuer la taille du tampon de gigue en condensant au moins une partie des données audio actuellement présentes dans le tampon de gigue (116 ; 126 ; 136).

**3.** Procédé selon l'une quelconque des revendications précédentes, dans lequel les données audio mises en mémoire tampon dans le tampon de gigue (116 ; 126) sont des données audio décodées.

**4.** Procédé selon l'une quelconque des revendications précédentes, dans lequel lesdites données supplémentaires sont générées en traitant ledit espace vide du tampon de gigue comme trames perdues et en compensant ledit espace vide du tampon de gigue par une gestion des mauvaises trames.

**5.** Procédé selon l'une quelconque des revendications précédentes, dans lequel des données supplémentaires sont générées en répliquant une forme d'ondes qui lance toute une multitude de longueurs de période à pas avant un point temporel où lesdites données supplémentaires doivent être ajoutées.

**6.** Procédé selon l'une quelconque des revendications précédentes, dans lequel lesdites données supplémentaires sont générées pour recouvrir une partie des données audio reçues dans le tampon de gigue (116 ; 126 ; 136).

**7.** Procédé selon l'une quelconque des revendications précédentes, dans lequel au moins une partie desdites données supplémentaires est atténuée dans le cas où plus d'une quantité prédéterminée de données supplémentaires est générée.

**8.** Procédé selon l'une quelconque des revendications précédentes, dans lequel des données sont condensées en recouvrant les données audio d'un premier paquet sélectionné (32) et les données audio d'un second paquet sélectionné (33) et en supprimant les paquets entre lesdits premier et second paquets (32, 33).

**9.** Procédé selon la revendication 8, dans lequel des données audio sont recouvertes en multipliant les données audio d'un premier paquet sélectionné (32) avec une fonction rampe descendante(36) et les données audio d'un second paquet sélectionné (33) avec une fonction rampe montante(37), en additionnant les données multipliées dudit premier et dudit second paquet (32, 33), et en supprimant les paquets situés entre ledit premier et ledit second paquet (32, 33).

**10.** Procédé selon l'une quelconque des revendications 1 à 3, dans lequel pour changer la taille du tampon de gigue, des données supplémentaires sont générées et/ou des données audio dans ledit tampon de gigue (116 ; 126 ; 136) sont condensées par une mise à l'échelle de temps du domaine temporel exécutée sur au moins une partie des données audio présentement mises en mémoire tampon dans le tampon de gigue (116 ; 126 ; 136) pour étendre ou compresser ladite au moins partie des données audio respectivement.

**11.** Procédé selon la revendication 10, dans lequel 1a mise à l'échelle de temps du domaine temporel comprend

a) la sélection des données audio reçues présentement mises en mémoire tampon dans le tampon de gigue (116 ; 126 ; 136), lesquelles données audio doivent être utilisées pour une mise à l'échelle de temps ;
b) l'application d'un procédé de mise à l'échelle de temps du domaine temporel sur les données audio sélectionnées pour obtenir des données audio mises à l'échelle de temps ; et
c) la substitution dans le tampon de gigue (116 ; 126 ; 136) des données audio mises à l'échelle de temps pour au moins une partie des données audio reçues sélectionnées.

**12.** Procédé selon la revendication 11, dans lequel la mise à l'échelle de temps appliquée sur les données audio reçues sélectionnées est étendue pour une longueur prédéterminée dépassant la longueur à utiliser pour substituer les données audio reçues dans le tampon de gigue (116 ; 126 ; 136), laquelle extension est recouverte par les données reçues qui suivent.

**13.** Procédé selon l'une quelconque des revendications 10 à 12, dans lequel la mise à l'échelle de temps du domaine temporel est basée sur une méthode de recouvrement basée sur un critère de ressemblance entre formes d'ondes (WSOLA).

**14.** Procédé selon l'une quelconque des revendications 1 à 3, dans lequel pour changer les données supplémentaires de taille du tampon de gigue sont générées et/ou les données audio dans ledit tampon de gigue (116 ; 126 ; 136) sont condensées par une mise à l'échelle de temps du domaine fréquentiel exécutée sur au moins une partie des données audio présentement mises en mémoire tampon dans le tampon de gigue (116 ; 126 ; 136) pour étendre ou compresser ladite au moins partie des données audio respectivement.

**15.** Procédé selon la revendication 14, dans lequel la mise à l'échelle de temps du domaine fréquentiel comprend :

- la transformation de Fourier recouvrant des parties à fenêtre (71-74) d'au moins la partie des données audio reçues présentement contenues dans le tampon de gigue (116 ; 126 ; 136) ;
- la modification par échelle de temps des données audio transformées de Fourier de chaque fenêtre (71-74) selon une quantité requise d'augmentation ou de diminution de la taille de tampon de gigue ; et
- la transformation de Fourier inverse des données audio transformées de Fourier et modifiées par échelle de temps de chaque fenêtre (71-74).

**16.** Procédé selon la revendication 14 ou 15, dans lequel la mise à l'échelle de temps du domaine fréquentiel est basée sur le vocodeur de phase.

**17.** Procédé selon l'une quelconque des revendications 1 à 2, dans lequel les données audio mises en mémoire tampon dans le tampon de gigue (136) sont des données audio codées paramétriques.

**18.** Procédé selon la revendication 17, dans lequel pour augmenter la taille du tampon de gigue, des données supplémentaires sont générées en utilisant un gestionnaire des mauvaises trames (136).

**19.** Procédé selon la revendication 17 ou 18, dans lequel pour diminuer la taille du tampon de gigue, des données audio dans le tampon de gigue sont condensées en supprimant au moins une trame dans le tampon de gigue (136).

**20.** Procédé selon la revendication 19, dans lequel des paramètres de gain et des coefficients de codage prédictif linéaire (LPC) des trames entourant la au moins une trame supprimée sont modifiés pour combiner de façon régulière les trames entourant la au moins une trame supprimée.

**21.** Procédé selon la revendication 17, dans lequel pour augmenter la taille du tampon de gigue, des données audio supplémentaires sont intercalées à partir des données adjacentes.

**22.** Procédé selon la revendication 17, dans lequel pour diminuer la taille du tampon de gigue, des données audio adjacentes sélectionnées ou espacées sont intercalées dans les données audio réduites.

**23.** Système de communication comprenant un réseau à commutation de paquets (113 ; 123 ; 133) et au moins une extrémité de réception éventuelle, l'unité de réception comprenant :

- un tampon de gigue (116 ; 126 ; 136) pour mettre en mémoire tampon les paquets reçus contenant des données audio ; et
- des moyens de traitement pour compenser les retards variables des paquets reçus mis en mémoire tampon dans ledit tampon de gigue (116; 126; 136);

**caractérisé en ce que** l'extrémité de réception comprend en outre :

- des moyens de traitement pour déterminer si la taille dudit tampon de gigue (116 ; 126 ; 136) devrait être accrue ou diminuée en se basant sur le retard global courant et la variation courante du retard entre les différents paquets ; et
- des moyens de traitement (116 ; 126 ; 136) pour changer la taille courante dudit tampon de gigue (116 ; 126 ; 136) selon le procédé de l'une des revendications 1 à 22.

**24.** Système de communication selon la revendication 23, dans lequel l'extrémité de réception comprend en outre un gestionnaires des mauvaises trames (115 ; 126 ; 136) pour compenser les paquets perdus au cours de la transmission vers l'extrémité de réception, lequel gestionnaire des mauvaises trames (115 ; 126 ; 136) est de plus utilisé pour générer des données supplémentaires pour une augmentation de la taille du tampon de gigue par les moyens de traitement afin de changer la taille courante dudit tampon de gigue (116 ; 126 ; 136).

**25.** Moyens de traitement (116 ; 126 ; 136) pour une extrémité de réception d'un système de communication comprenant un réseau à commutation de paquets (113 ; 123 ; 133), **caractérisés en ce que** lesdits moyens de traitement (116 ; 126 ; 136) sont conçus pour changer la taille courante d'un tampon de gigue (116 ; 126 ; 136) selon le procédé de l'une des revendications 1 à 22.

**26.** Extrémité de réception pour un système de communication comprenant un réseau à commutation de paquets (113 ; 123 ; 133), laquelle extrémité de réception comprend :

- un tampon de gigue (116 ; 126 ; 136) pour mettre en mémoire tampon les paquets reçus contenant des données audio ;
- des moyens de traitement pour compenser les retards variables des paquets reçus mis en mémoire tampon dans ledit tampon de gigue (116; 126; 136);
- des moyens de traitement pour déterminer si la taille dudit tampon de gigue (116 ; 126 ; 136) devrait être accrue ou diminuée en se basant sur le retard global courant et la variation courante du retard entre les différents paquets ; et
- des moyens de traitement (116 ; 126 ; 136) selon la revendication 25.

**27.** Extrémité de réception selon la revendication 26, comprenant en outre un gestionnaire des mauvaises trames (126 ; 136) pour compenser les paquets perdus au cours de la transmission vers ladite extrémité de réception, lequel gestionnaire des mauvaises trames (126 ; 136) est de plus utilisé pour générer des données supplémentaires pour une augmentation de la taille du tampon de gigue par les moyens de traitement (126 ; 136) afin de changer la taille courante dudit tampon de gigue (126 ; 136).

Jitter buffer size increase    Jitter buffer size decrease

Stream before jitter buffer
size increase/decrease

| 1 | 2 | 3 | 4 | 5 | 6 | 7 | 8 |

| 9 | 10 | 11 | 12 | 13 | 14 | 15 | 16 | 17 |

**18**

Stream after jitter buffer
increase/decrease with
BFH /overlapping method

| 1 | 2 | 3 | 4 | | 5 | 6 | 7 | 8 |

| 9 | 10 | 11 | 12 13 | 14 | 15 | 16 | 17 |

Stream after jitter buffer
increase/decrease with
time scaling method

| 1 | 2 | 3 | 4 | 5 | 6 | 7 | 8 |

| 9 | 10 | 11 | 12 13 14 | 15 | 16 | 17 |

## FIG. 1

Input

After 10 msec

Concealed

Fig.2

EP 1 382 143 B1

Fig.3

x(n)

41  41'  42  42'

$\tau^{-1}(S_{k-1})$  $\tau^{-1}(S_{k-1})+S$  $\tau^{-1}(S_k)$

$\Delta$

y(n)

A  B

$S_{k-1}$  $S_k$

Fig.4

EP 1 382 143 B1

Updating the jitter buffer

MWSOLA algortihm

```
┌─────────────┐
│    Start    │
└─────────────┘
       │
       ▼
┌─────────────────────┐
│ Pass the packets to be │
│ time scaled plus the  │
│ last 80 samples of the │
│ previous packet to the │
│  MWSOLA algorithm     │
└─────────────────────┘
       │
       ▼
┌─────────────────────┐
│      MWSOLA         │
└─────────────────────┘
       │
       ▼
┌─────────────────────┐
│  Update time scaled │
│    jitter buffer    │
└─────────────────────┘
       │
       ▼
┌─────────────────────┐
│  Overlapp add       │
│ extension with the first │
│ 80 samples of the next │
│   valid packet      │
└─────────────────────┘
       │
       ▼
┌─────────────┐
│     End     │
└─────────────┘
```

```
┌─────────────────────┐
│   Set up initial    │
│  parameters and     │
│ initialize output signal │
└─────────────────────┘
       │
       ▼
┌─────────────────────┐◄────────┐
│ Obtain best correlation │     │
│  inside search region │      │
│   for current frame   │      │
└─────────────────────┘       │
       │                       │
       ▼                       │
┌─────────────────────┐        │
│   Copy new frame to  │       │
│    output signal     │       │
└─────────────────────┘        │
       │                       │
       ▼                       │
      ╱╲                       │
     ╱  ╲      Y               │
    ╱ Is another ╲─────────────┘
    ╲   frame   ╱
     ╲ needed  ╱
      ╲╱
       │ N
       ▼
┌─────────────────────┐
│  Return time scaled │
│  signal and extension │
└─────────────────────┘
```

**FIG. 5**

Fig.6

Fig.7

Start

Get input signal and time scaling factor

Set up initial parameters and initialize output signal

Get next analysis instant and synthesis instant

Get new frame at analysis time instant $t_a^u$

Calculate next FFT at the analysis time instant (eq. 6.1)

Calculate heterodyned phase increments (eq. 6.7)

Calculate instantenous frequencies (eq. 6.8)

Calculate time scaled phases (eq. 6.9)

Obtain IFFT of the modified FFT at the analysis time instant (eq. 6.2)

Multiply by synthesis window and add to output signal at synthesis time instant $t_a^u$ (eq. 6.3)

Another frame — yes

no

Smooth edges and pass on time scaled output signal

End

Fig.8

Signal before time scaling

Signal after time scaling

amplitude

amplitude

sample

FIG. 9

Change
jitter buffer
size

No

Increase size

Decrease size

Interpolate
additional frame
from two adjacent
frames

Interpolate two
adjacent/ spaced
apart frames into
one

Decoder

# FIG. 10

29

116 — Adaptive jitter buffer/ time scaling

control

115 — Decoder

114 — Frame memory

113 — IP

112 — Packetization

111 — Encoder

**FIG. 11**

FIG. 12

FIG. 13